# EUROPEAN PATENT APPLICATION

(11) **EP 4 687 196 A1**
(43) Date of publication of application: **04.02.2026**
(21) Application number: 25192229.0
(22) Date of filing: 28.07.2025
(51) Int. Cl.: H01M 10/653, H01M 10/658, H01M 50/291, H01M 10/0525, H01M 50/293

(54) **RECHARGEABLE LITHIUM BATTERY MODULE**

(30) Priority: 30.07.2024 KR 20240101146
(71) Applicant: SAMSUNG SDI CO., LTD., Yongin-si, Gyeonggi-do 17084 (KR)
(72) Inventor: KIM, Yuhyun, Yongin-si, Gyeonggi-do 17084 (KR); OH, Songyul, Yongin-si, Gyeonggi-do 17084 (KR); CHA, Jungwook, Yongin-si, Gyeonggi-do 17084 (KR)
(74) Representative: Michalski Hüttermann & Partner Patentanwälte mbB

(57) **Abstract**

The present disclosure relates to a rechargeable lithium battery module including two or more cell structures and a polymer-metal composite film between the cell structures, wherein the polymer-metal composite film includes a polymer film; and metal coating layers on both surfaces of the polymer film, and the polymer-metal composite film is exposed longer than the cell structure in a height direction or a width direction of the cell structure.

## Description

### BACKGROUND

### 1. Field

Embodiments of the present disclosure relate to a rechargeable lithium battery module.

### 2. Description of the Related Art

Recently, with the rapid spread of electronic devices that use batteries, such as mobile phones, laptop computers, and electric vehicles, the demand for rechargeable batteries having high energy density and high capacity is rapidly increasing. Accordingly, research and development to improve the performance of rechargeable lithium batteries is actively underway.

Rechargeable lithium batteries include a positive electrode and a negative electrode including an active material capable of intercalating and deintercalating lithium ions, and an electrolyte solution, and generate electrical energy through oxidation and reduction reactions if (e.g., when) lithium ions are intercalated and deintercalated from the positive electrode and the negative electrode.

Because the rechargeable lithium batteries, which are recharged after the discharge and continuously (e.g., substantially continuously) used, exhibit performance differences depending on its charging and discharging state, efforts to improve the performance of the rechargeable lithium batteries by improving a charge method are being made.

### SUMMARY

Some example embodiments of the present disclosure provide a rechargeable lithium battery module having excellent insulation effect (e.g., thermal insulation effect), heat transmission prevention effect (e.g., heat transmission reduction effect), and heat dissipation effect.

Some example embodiments provide a rechargeable lithium battery module including two or more cell structures and a polymer-metal composite film between the cell structures, wherein the polymer-metal composite film includes a polymer film; and metal coating layers on both surfaces (e.g., two opposing surfaces) of the polymer film, and the polymer-metal composite film is exposed longer than the cell structure in a height direction or a width direction of the cell structure. For example, a height of the polymer-metal composite film may be larger than a height of the cell structure, and/or a width of the polymer-metal composite film may be larger than a width of the cell structure. Preferably, the height direction and the width direction are substantially perpendicular to each other.

The rechargeable lithium battery module according to some example embodiments has features of excellent insulation effect (e.g., thermal insulation effect), heat transmission prevention effect (e.g., heat transmission reduction effect), and heat dissipation effect.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a cross-sectional view schematically illustrating a rechargeable lithium battery module according to some example embodiments.
FIG. 2 is a cross-sectional view schematically illustrating a polymer-metal composite film according to some example embodiments.
FIGS. 3 to 6 are schematic view illustrating cell structures according to some example embodiments.

### DETAILED DESCRIPTION

Hereinafter, embodiments of the present disclosure will be described in more detail. However, these embodiments are presented as examples, and the present disclosure is not limited thereto, and the present disclosure is defined by the scope of the appended claims and equivalents thereof.

The terminology used herein is used to describe embodiments only and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and/or the like of the constituents.

Herein, it should be understood that terms such as "comprises," "includes," or "have" are intended to designate the presence of an embodied feature, number, step, element, or a combination thereof, but do not preclude the possibility of the presence or addition of one or more other features, number, step, element, or a combination thereof.

In the drawings, the thickness of layers, films, panels, regions, and/or the like, may be exaggerated for clarity and like reference numerals designate like elements throughout the specification. It will be understood that if (e.g., when) an element such as a layer, film, region, or substrate is referred to as being "on" another element, it can be directly on the other element or intervening elements may also be present. In embodiments, if (e.g., when) an element is referred to as being "directly on" another element, there are no intervening elements present.

In embodiments, "layer" herein includes not only a shape formed on the whole surface if (e.g., when) viewed from a plan view, but also a shape formed on a partial surface.

Unless otherwise specified in this specification, what is indicated in the singular may also include the plural. In embodiments, unless otherwise specified, "A or B" may mean "including A, including B, or including A and B".

"Metal" is interpreted as a concept including ordinary metals, transition metals and/or metalloids (semi-metals).

As used herein, if (e.g., when) a definition is not otherwise provided, the particle diameter may be an average particle diameter. In embodiments, the particle diameter may refer to an average particle diameter (D50), which means the diameter of particles having a cumulative volume of 50 volume% in the particle size distribution. The average particle size (D50) may be measured by any suitable method generally used in the art, for example, by a particle size analyzer, and/or by a transmission electron microscope image, and/or a scanning electron microscope image. In embodiments, a dynamic light-scattering measurement device is used to perform a data analysis, and the number of particles is counted for each particle size range. From this, the average particle diameter (D50) value may be easily obtained through a calculation. In embodiments, it can be measured using a laser diffraction method. If (e.g., when) measuring by the laser diffraction method, for example, the particles to be measured may be dispersed in a dispersion medium, and then introduced into a commercially available laser diffraction particle diameter measuring device (e.g., Microtrac MT 3000), and ultrasonic waves of about 28 kHz with an output of 60 W may be irradiated to calculate an average particle diameter (D50) on the basis of 50% of the particle diameter distribution in the measuring device.

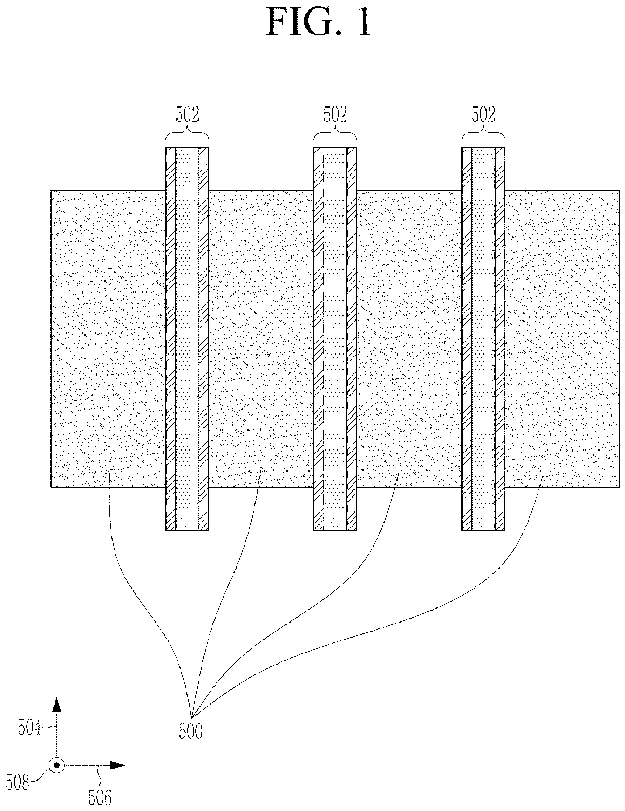

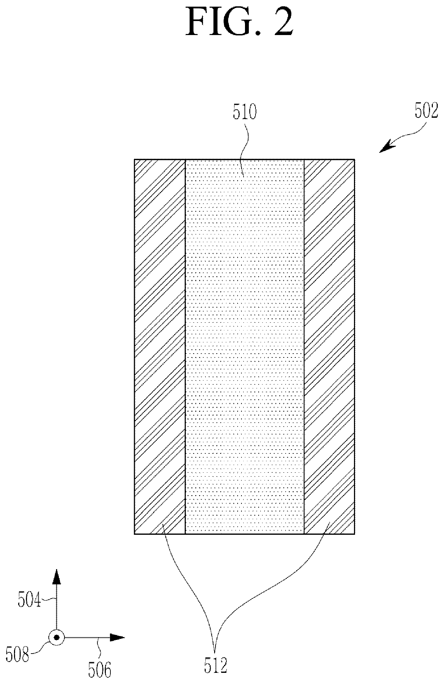

FIG. 1 is a cross-sectional view schematically illustrating a rechargeable lithium battery module according to some example embodiments, and FIG. 2 is a cross-sectional view schematically illustrating a polymer-metal composite film 502 according to some example embodiments.

For example, a height direction 504 and a width direction 508 marked in FIGS. 1 and 2 are directions extending parallel (e.g., substantially parallel) to the surfaces (main surfaces) of sheet shaped components and approximately perpendicular directions.

For example, a length direction 506 may be used as the same concept as a stacking direction in which the cell structure 500 and the polymer-metal composite film 502 are stacked and thus, may be perpendicular (e.g., substantially perpendicular) to the surfaces (main surfaces) of the sheet shaped components. For example, the length direction 506 may be approximately perpendicular to the height direction 504 and the width direction 508.

Hereinafter, referring to FIGS. 1 and 2, the rechargeable lithium battery module is further described.

A rechargeable lithium battery module according to some example embodiments includes two or more cell structures 500 and a polymer-metal composite film 502 between the cell structures 500, wherein the polymer-metal composite film 502 includes a polymer film 510; and metal coating layers 512 on both surfaces of the polymer film 510, and the polymer-metal composite film 502 is exposed longer than the cell structure 500 in a height direction 504 or a width direction 508 of the cell structure 500. For example, a height of the polymer-metal composite film 502 may be larger than a height of the cell structure 500 and the polymer-metal composite film 502 may extend past the cell structure 500 at two sides in the length direction 506, and/or a width of the polymer-metal composite film 502 may be larger than a width of the cell structure 500 and the polymer-metal composite film 502 may extend past the cell structure 500 at two sides in the width direction 508.

Previously, a polymer sheet has been used between the cell structures 500, but because such a polymer sheet has no insulating function (e.g., no or substantially no thermal insulating function), there is a problem of not effectively dissipating heat generated in the cell structures 500 during the battery charging and discharging. In embodiments, if (e.g., when) a highly conductive sheet (e.g., a highly electrically conductive sheet) is used between the cell structures 500, the heat generated in the cell structures 500 during the battery charging and discharging may be discharged, but there is another problem of not preventing heat transfer to adjacent cell structures 500.

The rechargeable lithium battery module according to some example embodiments includes a polymer-metal composite film 502 exposed longer than the cell structures 500 in the height direction 504 or the width direction 508 between the cell structures 500, thereby exhibiting excellent elasticity as well as excellent insulating effect (e.g., thermal insulating effect), heat transfer prevention effect, and heat dissipation effect.

The polymer-metal composite film 502 may serve as an elastic sheet that maintains a fastening pressure of the rechargeable lithium battery module structure as well as separation of the cell structures 500 during the battery charging and discharging.

For example, the polymer-metal composite film 502 may have a thickness of about 4 µm to about 20 µm, for example, about 5 µm to about 20 µm, about 5 µm to about 15 µm, or about 5 µm to about 12 µm.

For example, the polymer-metal composite film 502 may have tensile strength (MD; Machine Direction) of about 200 N/mm² to about 500 N/mm², for example, about 250 N/mm² to about 500 N/mm², or about 400 N/mm² to about 500 N/mm². For example, the polymer-metal composite film 502 may have an elongation of about 10% to about 60%, for example, about 20% to about 60%, or about 40% to about 60%. For example, the tensile strength (MD) and the elongation of the polymer-metal composite film 502 may be measured by using an ASTM D882 tester and/or an ISO 527-3 tester.

In some example embodiments, the polymer-metal composite film 502 includes a polymer film 510; and metal coating layers 512 on both surfaces (e.g., two opposing surfaces) of the polymer film 510, and the polymer-metal composite film 502 is exposed longer than the cell structure 500 in a height direction 504 or a width direction 508 of the cell structure 500.

For example, a length (or height) in the height direction 504 or a length (or width) in the width direction 508 of the polymer-metal composite film 502 may be greater than about 100% and less than or equal to about 103% of the cell structure 500. For example, the height of the polymer-metal composite film 502 may be greater than about 100% and less than or equal to about 103% of the height of the cell structure 500 and/or the width of the polymer-metal composite film 502 may be greater than about 100% and less than or equal to about 103% of the width of the cell structure 500.

For example, the length in the height direction 504 and the length in the width direction 508 of the polymer-metal composite film 502 may be greater than about 100% and less than or equal to about 103% of those of the cell structure 500.

As an example, the length in the height direction 504 or in the width direction 508 of the polymer-metal composite film 502 may be about 100.1% to about 103%, about 100.5% to about 103%, about 101% to about 103%, about 101.5% to about 103%, or about 101% to about 102% of that of the cell structure 500.

If the above ranges are satisfied, a rechargeable lithium battery module having excellent insulation effect (e.g., thermal insulation effect), heat transmission prevention effect (e.g., heat transmission reduction effect), and heat dissipation effect may be implemented.

If the length in the height direction 504 or in the width direction 508 of the polymer-metal composite film 502 is less than or equal to about 100% of that of the cell structure 500, the insulation effect (e.g., thermal insulation effect), the heat transmission prevention effect (e.g., heat transmission reduction effect), and the heat dissipation effect between the cell structures 500 may be insignificant, unsuitable, or undesirable, but if greater than about 103%, it may be difficult to maintain the fastening pressure of the rechargeable lithium battery module structure.

### Polymer Film

The polymer film 510, which has low thermal conductivity, may perform an insulating function (e.g., thermal insulating function) to prevent the heat generated in the cell structure 500 during the battery charging and discharging from being transferred to adjacent cell structures 500 (or reduce a transmission of such heat). In embodiments, even if batteries are in an abnormal state, it may serve to prevent or reduce the heat transfer to adjacent cell structures 500.

In embodiments, the polymer film 510, which has excellent elasticity, may serve as an elastic sheet that maintains a space between the cell structures 500 during the battery charging and discharging, even if (e.g., when) the cell structures 500 expand or contract.

For example, the polymer film 510 may include polyethylene, polypropylene, polyamide, polyimide, polyethylene terephthalate, polyethylene naphthalate, polyacrylonitrile, poly(meth)acrylate, polymethyl(meth)acrylate, polyvinylidene fluoride, polytetrafluoroethylene, polyvinyl chloride, polyurethane, an epoxy resin, a nylon resin, an acrylic resin, polystyrene, polyethyleneoxide, polyvinyl alcohol, a silicone resin, a styrene-butadiene-rubber, an acrylonitrile-butadiene-rubber, a hydrogenated nitrile-butadiene-rubber, a copolymer thereof, or a mixture thereof.

For example, a thickness of the polymer film 510 may be about 2 µm to about 10 µm, for example about 4 µm to about 10 µm, about 2 µm to about 8 µm, or about 4 µm to about 8 µm.

### Metal Coating Layer

The metal coating layer 512, which has high thermal conductivity, may perform a heat dissipation function to release the heat generated in the cell structures 500 during the charging and discharging of batteries.

For example, the metal coating layer 512 may include Al, Cu, Fe, Ni, stainless steel (SUS), Ti, or a combination thereof.

For example, the metal coating layer 512 may have a thickness of about 0.5 µm to about 5 µm, for example, about 0.5 µm to about 4 µm, about 1 µm to about 5 µm, or about 1 µm to about 4 µm.

For example, the polymer film 510 and the metal coating layer 512 may have a ratio thickness of about 1:1 to about 10:1, for example, about 2:1 to about 10:1, about 2.5:1 to about 10:1, or about 5:1 to about 10:1.

If the thickness of the polymer film 510, the thickness of the metal coating layer 512, and the thickness ratio of the polymer film 510 and the metal coating layer 512 satisfy the foregoing ranges, it is possible to implement a rechargeable lithium battery module having excellent insulation effect (e.g., thermal insulation effect), heat transfer prevention effect (e.g., heat transfer reduction effect), and heat dissipation effect between the cell structures 500.

### Cell Structure

The cell structure 500 may be referred to hereinafter as a rechargeable lithium battery 100.

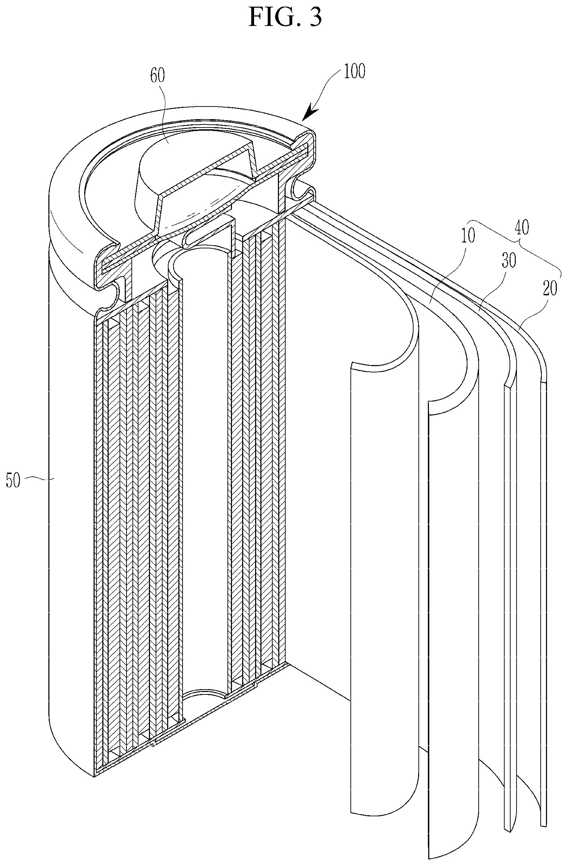

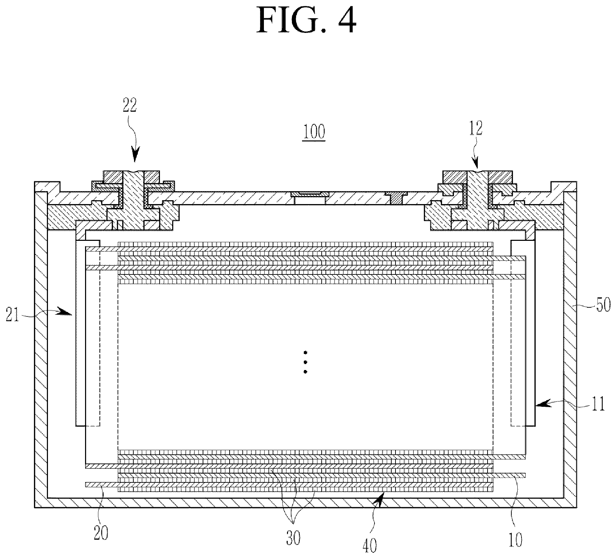

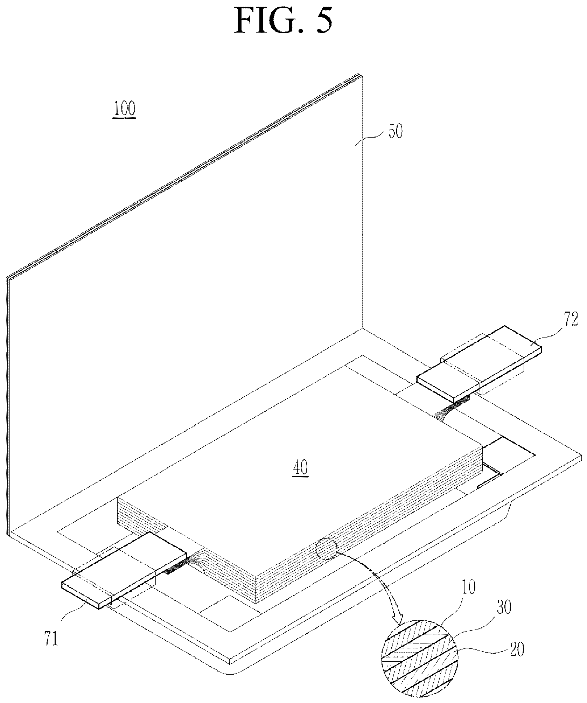

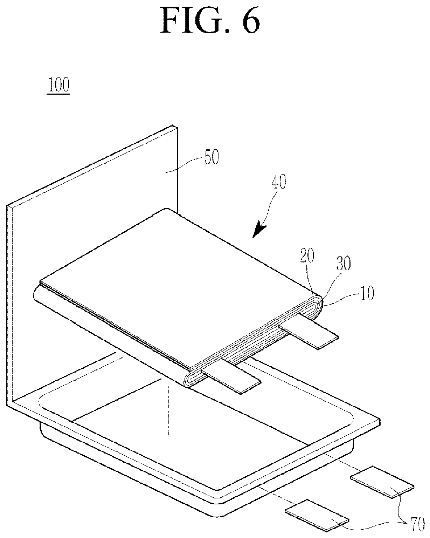

The structure 500 (rechargeable lithium battery 100) may be classified into cylindrical, prismatic, pouch, coin, or the like depending on the shape. FIGS. 3 to 6 are schematic view illustrating cell structures according to some example embodiments where FIG. 3 shows a cylindrical cell structure shape, FIG. 4 shows a prismatic cell structure 500 shape, and FIGS. 5 and 6 show a pouch-shaped cell structure 500 shape.

Referring to FIGS. 3 to 6, the rechargeable lithium battery 100 includes an electrode assembly 40 including a separator 30 between a positive electrode 10 and a negative electrode 20, and a case in which the electrode assembly 40 is included. The positive electrode 10, the negative electrode 20, and the separator 30 may be impregnated with an electrolyte solution. The rechargeable lithium battery 100 may include a sealing member 60 that seals the case 50 as shown in FIG. 3.

In FIG. 4, the rechargeable lithium battery 100 may include a positive electrode lead tab 11, a positive electrode terminal 12, a negative electrode lead tab 21, and a negative electrode terminal 22.

As shown in FIGS. 5 and 6, the rechargeable lithium battery 100 includes an electrode tab 70 (FIG. 6), for example, a positive electrode tab 71 and a negative electrode tab 72 that serve as an electrical path for inducing the current formed in the electrode assembly 40 to the outside.

In some example embodiments, the cell structure 500 may be a rechargeable lithium battery 100, which may include a positive electrode 10 including a positive electrode active material, a negative electrode 20 including a negative electrode active material, a separator 30 between the positive electrode and the negative electrode, and an electrolyte solution.

In some example embodiments, the cell structure 500 may be an all-solid-state rechargeable battery, which may include a positive electrode, a negative electrode, and a solid electrolyte layer between the positive electrode and the negative electrode.

The cell structure 500 may be obtained by using a unit cell including a positive electrode, a negative electrode, and a separator or a unit cell including a positive electrode, a negative electrode, and a solid electrolyte layer and stacking at least two unit cells, for example, about 2 unit cells to about 100 unit cells, about 3 unit cells to about 50 unit cells, about 4 unit cells to about 20 unit cells, and/or the like.

### Positive Electrode Active Material

The positive electrode active material may include a compound (lithiated intercalation compound) capable of intercalating and deintercalating lithium. For example, at least one selected from a composite oxide of lithium and a metal selected from cobalt, manganese, nickel, and combinations thereof may be used.

The composite oxide may be a lithium transition metal composite oxide, and examples thereof may include lithium nickel-based oxide, lithium cobalt-based oxide, lithium manganese-based oxide, lithium iron phosphate-based compound, cobalt-free lithium nickel-manganese-based oxide, or a combination thereof.

As an example, the following compounds represented by any one selected from the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

For example, the positive electrode active material may be may be a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material can realize high capacity and can be applied to a high-capacity, high-density rechargeable lithium battery.

### Positive Electrode

A positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

For example, the positive electrode may further include an additive that can serve as a sacrificial positive electrode.

An amount of the positive electrode active material may be about 90 wt% to about 99.5 wt% based on 100% by weight of the positive electrode active material layer, and amounts of the binder and the conductive material may be about 0.5 wt% to about 5 wt%, respectively, based on 100 wt% of the positive electrode active material layer.

The binder serves to well attach the positive electrode active material particles to each other and also to well attach the positive electrode active material to the current collector. Examples of the binder may include polyvinyl alcohol, carboxymethylcellulose, hydroxypropylcellulose, diacetylcellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material is used to impart conductivity (e.g., electrical conductivity) to the electrode, and any suitable material that does not cause a chemical change (e.g., an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, and/or the like, in a form of a metal powder and/or a metal fiber; a conductive polymer (e.g., an electrically conductive polymer)) such as a polyphenylene derivative; or a mixture thereof.

Al may be used as the current collector, but the present disclosure is not limited thereto.

### Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, for example crystalline carbon, amorphous carbon or a combination thereof. The crystalline carbon may be graphite such as non-shaped, sheet-shaped, flake-shaped, sphere-shaped, and/or fiber-shaped natural graphite and/or artificial graphite, and the amorphous carbon may be a soft carbon, a hard carbon, a mesophase pitch carbonization product, calcined coke, and/or the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, SiOx (0 < x ≤ 2), a Si-Q alloy (wherein Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO₂, a Sn-based alloy, or a combination thereof.

The silicon-carbon composite may be a composite of silicon and amorphous carbon. According to some example embodiments, the silicon-carbon composite may be in a form of silicon particles and amorphous carbon coated on the surface of the silicon particles. For example, it may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material and/or the Sn-based negative electrode active material may be used in combination with a carbon-based negative electrode active material.

### Negative Electrode

The negative electrode for a rechargeable lithium battery includes a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder serves to well attach the negative electrode active material particles to each other and also to well attach the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If (e.g., when) an aqueous binder is used as the negative electrode binder, a cellulose-based compound capable of imparting or increasing viscosity may be further included. The cellulose-based compound may include at least one of carboxymethyl cellulose, hydroxypropylmethyl cellulose, methyl cellulose, or an alkali metal salt thereof. The alkali metal may include Na, K, and/or Li.

The dry binder may be a polymer material capable of being fibrous (e.g., capable of being fiberized), and may be, for example, polytetrafluoroethylene, polyvinylidene fluoride, a polyvinylidene fluoride-hexafluoropropylene copolymer, polyethylene oxide, or a combination thereof.

The conductive material is used to impart conductivity (e.g., electrical conductivity) to the electrode, and any suitable material that does not cause chemical change (e.g., an undesirable chemical change in the rechargeable lithium battery) and conducts electrons can be used in the battery. Examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, and/or the like in a form of a metal powder and/or a metal fiber; a conductive polymer (e.g., an electrically conductive polymer) such as a polyphenylene derivative; or a mixture thereof.

The negative electrode current collector may include a copper foil, a nickel foil, a stainless steel foil, a titanium foil, a nickel foam, a copper foam, a polymer substrate coated with a conductive metal (e.g., an electrically conductive metal), and a combination thereof.

As another example, if the cell stack is an all-solid-state rechargeable battery, the negative electrode for the all-solid-state rechargeable battery may be a precipitation-type negative electrode. The precipitation-type negative electrode does not include a negative electrode active material during battery assembly, but may refer to a negative electrode in which lithium metal, and/or the like is precipitated and/or electrodeposited on the negative electrode during battery charging, to thereby serve as a negative electrode active material.

### Electrolyte Solution

The electrolyte solution for a rechargeable lithium battery includes a non-aqueous organic solvent and a lithium salt.

The non-aqueous organic solvent serves as a medium to transmit ions taking part in the electrochemical reaction of a battery.

The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethylpropionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, and/or an ether bond, and/or the like); amides such as dimethylformamide; dioxolanes such as 1,3-dioxolane, 1,4-dioxolane, and/or the like; sulfolanes, and/or the like.

The non-aqueous organic solvents may be used alone or in combination of two or more.

In embodiments, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. For example, the lithium salt may include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), x and y are integers of 1 to 20, lithium trifluoromethane sulfonate, lithium tetrafluoroethanesulfonate, lithium difluorobis(oxalato)phosphate (LiDFOB), and lithium bis(oxalato) borate (LiBOB).

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces (e.g., two opposing surfaces) of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer and/or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

### Solid Electrolyte Layer

In an all-solid-state rechargeable battery according to some example embodiments, the solid electrolyte layer may include an inorganic solid electrolyte, such as a sulfide-based solid electrolyte and/or an oxide-based solid electrolyte.

For example, the solid electrolyte layer may include a sulfide-based solid electrolyte having excellent ionic conductivity. The sulfide-based solid electrolyte particle may include for example Li₂S-P₂S₅, Li₂S-P₂S₅-LiX (X is a halogen element, for example I, or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ(wherein m and n is each an integer and Z is Ge, Zn, or Ga),, Li₂S-GeS₂, Li₂S-SiS₂-Li₃PO₄, Li₂S-SiS₂-LiₚMO_{q} (wherein p and q each an integer and M is P, Si, Ge, B, Al, Ga, or In), or a combination thereof.

Such a sulfide-based solid electrolyte may be obtained by, for example, mixing Li₂S and P₂S₅ in a mole ratio of about 50:50 to about 90:10 or about 50:50 to about 80:20 and optionally, performing heat treatment. Within the above mixing ratio ranges, a sulfide-based solid electrolyte having excellent ionic conductivity may be prepared. The ionic conductivity may be further improved by adding SiS₂, GeS₂, B₂S₃, and/or the like as other components thereto.

Mechanical milling and/or a solution method may be applied as a mixing method of sulfur-containing raw materials for preparing a sulfide-based solid electrolyte. The mechanical milling is to make starting materials into particulates by putting the starting materials like in a ball mill reactor and fervently stirring them. The solution method may be performed by mixing the starting materials in a solvent to obtain a solid electrolyte as a precipitate. In embodiments of a heat treatment after mixing, crystals of the solid electrolyte may be more robust and ionic conductivity may be improved. For example, the sulfide-based solid electrolyte may be prepared by mixing sulfur-containing raw materials and performing heat treatment two or more times. In embodiments, a sulfide-based solid electrolyte having high ionic conductivity and robustness may be prepared.

The sulfide-based solid electrolyte according to some example embodiments, for example, may be prepared through a first heat treatment of mixing sulfur-containing raw materials and firing at about 120 °C to about 350 °C and a second heat treatment of mixing the resultant of the first heat treatment and firing the same at about 350 °C to about 800 °C. The first heat treatment and the second heat treatment may be performed in an inert gas and/or nitrogen atmosphere, respectively. The first heat treatment may be performed for about 1 hour to about 10 hours, and the second heat treatment may be performed for about 5 hours to about 20 hours. Small raw materials may be milled through the first heat treatment, and a final solid electrolyte can be synthesized through the second heat treatment. Through such two or more heat treatments, a sulfide-based solid electrolyte having high ionic conductivity and high performance can be obtained, and such a solid electrolyte may be suitable for mass production. The temperature of the first heat treatment may be, for example, about 150 °C to about 330 °C, or about 200 °C to about 300 °C, and the temperature of the second heat treatment may be, for example, about 380 °C to about 700 °C, or about 400 °C to about 600 °C.

For example, the sulfide-based solid electrolyte particles may include argyrodite-type sulfide. The argyrodite-type sulfide may be represented by a chemical formula of, for example, LiₐM_{b}P_{c}S_{d}Aₑ (wherein a, b, c, d, and e are all 0 or more and 12 or less, and M is Ge, Sn, Si, or a combination thereof, and A is F, Cl, Br, or I), and as an example, may be represented by a chemical formula of Li₇₋ₓPS₆₋ₓAₓ (wherein x is 0.2 or more and 1.8 or less, and A is F, Cl, Br, or I). The argyrodite-type sulfide may be, for example, Li₃PS₄, Li₇P₃S₁₁, Li₇PS₆, Li₆PS₅Cl, LisPSsBr, Li_{5.8}PS_{4.8}Cl_{1.2}, Li_{6.2}PS_{5.2}Br_{0.8}, and/or the like.

The sulfide-based solid electrolyte including such argyrodite-type sulfides may have high ionic conductivity close to the range of about 10⁻⁴ to about 10⁻² S/cm, which is the ionic conductivity of general liquid electrolytes at room temperature, and may form an intimate bond between the positive electrode active material and the solid electrolyte without causing a decrease in ionic conductivity, and furthermore, an intimate interface between the electrode layer and the solid electrolyte layer. An all-solid-state rechargeable battery including the same may have improved battery performance such as rate capability, coulombic efficiency, and cycle-life characteristics.

The argyrodite-type sulfide-based solid electrolyte may be prepared, for example by mixing lithium sulfide and phosphorus sulfide, and optionally lithium halide. Heat treatment may be performed after mixing them. The heat treatment may include, for example, two or more heat treatments. In embodiments, the preparing the argyrodite-type sulfide-based solid electrolyte may include, for example, a first heat treatment in which raw materials are mixed and fired at about 120 °C to about 350 °C, and a second heat treatment in which the resultant of the first heat treatment is mixed again and fired at about 350 °C to about 800 °C.

The solid electrolyte layer may include an oxide-based inorganic solid electrolyte. For example, the oxide-based inorganic solid electrolyte may include, for example, Li₁₊ₓTi₂₋ₓAl(PO₄)₃ (LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)Os (PZT), Pb₁₋ₓLaₓZr_{1-y}Ti_{y}O₃ (PLZT) (0≤x<1, 0≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)x(Ti, Ge)₂-xSiyP₃-yO₁₂ (0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, Garnet-based ceramics Li₃₊ₓLa₃M₂O₁₂ (wherein M = Te, Nb, or Zr; x is an integer of 1 to 10), or a mixture thereof.

Examples and comparative examples of the present disclosure are described below. However, the following examples are only examples of the present disclosure, and the present disclosure is not limited to the following examples.

### Examples

### Example 1

A polymer-metal composite film was prepared, in which aluminum was deposited to form an aluminum metal coating layer having a thickness of about 2 µm on both surfaces (e.g., two opposing surfaces) of a polyethylene terephthalate polymer film having a thickness of about 5 µm. The polymer-metal composite film had a length of 63 mm in a height direction.

Subsequently, a cell structure having a length of 62 mm in the height direction was prepared. The length of the polymer-metal composite film in the height direction was 101.6% of the length of the cell structure in the height direction.

As shown in FIG. 1, a rechargeable lithium battery module according to Example 1 was manufactured by using four cell structures and interposing the polymer-metal composite film between the cell structures.

### Comparative Example 1

A rechargeable lithium battery module according to Comparative Example 1 was manufactured in substantially the same manner as described with respect to Example 1 except that the length of the polymer-metal composite film in the height direction and the length of the cell structure in the height direction were the same as 62 mm. The length of the polymer-metal composite film in the height direction was 100% of that of the cell structure in the height direction.

### Comparative Example 2

A rechargeable lithium battery module according to Comparative Example 1 was manufactured in substantially the same manner as described with respect to Example 1 except that the length of the polymer-metal composite film in the height direction was 59 mm, and the length of the cell structure in the height direction was 62 mm. The length of the polymer-metal composite film in the height direction was 95.2% of that of the cell structure in the height direction.

### Evaluation Examples

### Evaluation Example 1: Insulation Evaluation

Each of the rechargeable lithium battery modules according to Example 1 and Comparative Examples 1 and 2 proceeded with heat propagation evaluation.

Each of the rechargeable lithium battery modules was prepared to comprise three cell structures connected in series and adjacent to each other with two polymer-metal composite films provided respectively between the cell structures and then, placed in a chamber.

Subsequently, a heating pad was placed between the 2^{nd} cell structure and the polymer-metal composite films on both sides (e.g., two opposing sides) thereof in the center of the rechargeable lithium battery module. The heating pad was provided between the 1^{st} cell structure and the 2^{nd} cell structure and between the 2^{nd} cell structure and the 3^{rd} cell structure.

Subsequently, while increasing a temperature of the heating pad at a rate of 6 °C/min, time taken for a temperature of the 1^{st} and 3^{rd} cell structures neighboring each other to reach 100 °C was measured, and the results are shown in Table 1. Whether or not thermal runaway occurred in the rechargeable lithium battery module during the heating process also was provided.

### Evaluation Example 2: Heat Dissipation Evaluation

Rechargeable lithium battery modules including heating pads were prepared in substantially the same manner as in Evaluation Example 1.

Subsequently, after heating the 2^{nd} cell at 40 °C for 10 minutes by using the heating pads, time taken for a temperature of the 2^{nd} cell to go back to room temperature (25 °C) was measured.

If (e.g., when) the measured time was less than or equal to 1 hour, '⊚' was given, if (e.g., when) greater than 1 hour and less than 4, '∘' was given, and if (e.g., when) greater than or equal to 4 hours, '△' was given, and the results are shown in Table 1.

**Table 1**

| | | Insulation evaluation (thermal conductivity) | Heat dissipation evaluation |
|---|---|---|---|
| Example 1 | If (e.g., when) the height direction length of the polymer-metal composite film is longer than that of the cell structure | 20 minutes /thermal runaway does not occur | ⊚ |
| Comparative Example 1 | If (e.g., when) the height direction length of the cell structure and the polymer-metal composite film are the same | 10 minutes /thermal runaway does not occur | ○ |
| Comparative Example 2 | If (e.g., when) the cell structure is longer in the height direction than the polymer-metal composite film | 10 minutes /thermal runaway occurs | Δ |

Referring to Table 1, in Example 1, the time taken for a temperature of the 1^{st} and 3^{rd} cell structures adjacent to the 2^{nd} cell structure to reach 100 °C was 20 minutes, but in Comparative Example 1, the time was 10 minutes, which confirmed that Example 1 exhibited far superior insulation effects (e.g., thermal insulation effects). In Comparative Example 2, in which the cell structure was longer than the polymer-metal composite film in the height direction, thermal runaway occurred, which confirmed inferior safety.

Example 1 exhibited superbly excellent dissipation evaluation results, compared with Comparative Examples 1 and 2.

While the subject matter of this disclosure has been described in connection with what is presently considered to be practical example embodiments, it is to be understood that the present disclosure is not limited to the disclosed embodiments, but, on the contrary, is intended to cover various suitable modifications and equivalent arrangements included within the spirit and scope of the appended claims, and equivalents thereof.

### Description of Symbols

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |
| 500: | cell structure | | |
| 502: | polymer-metal composite film | | |
| 504: | height direction | | |
| 506: | length direction | | |
| 508: | width direction | | |
| 510: | polymer film | | |
| 512: | metal coating layer | | |

## Claims

1. A rechargeable lithium battery module comprising:
two or more cell structures (500, 100) and a polymer-metal composite film (502) between the cell structures (500, 100),
wherein the polymer-metal composite film (502) comprises a polymer film (510); and metal coating layers (512) on both surfaces of the polymer film (510), and
the polymer-metal composite film (510) is exposed longer than the cell structure (500) in a height direction (504) or a width direction (508) of the cell structure (500, 100).

2. The rechargeable lithium battery module as claimed in claim 1, wherein:
a length in the height direction (504) or a length in the width direction (508) of the polymer-metal composite film (502) is greater than 100% and less than or equal to 103% of the cell structure (500, 100).

3. The rechargeable lithium battery module according to any of the preceding claims, wherein:
a thickness of the polymer-metal composite film (502) is 4 µm to 20 µm.

4. The rechargeable lithium battery module according to any of the preceding claims, wherein:
a tensile strength (MD; Machine Direction) of the polymer-metal composite film (502) is 200 N/mm² to 500 N/mm².

5. The rechargeable lithium battery module according to any of the preceding claims, wherein:
an elongation of the polymer-metal composite film (502) is 10% to 60%.

6. The rechargeable lithium battery module according to any of the preceding claims, wherein:
the polymer film (502) comprises polyethylene, polypropylene, polyamide, polyimide, polyethylene terephthalate, polyethylene naphthalate, polyacrylonitrile, poly(meth)acrylate, polymethyl(meth)acrylate, polyvinylidene fluoride, polytetrafluoroethylene, polyvinyl chloride, polyurethane, an epoxy resin, a nylon resin, an acrylic resin, polystyrene, polyethylene oxide, polyvinyl alcohol, a silicone resin, a styrene-butadiene-rubber, an acrylonitrile-butadiene-rubber, a hydrogenated nitrile-butadiene-rubber, a copolymer thereof, or a mixture thereof.

7. The rechargeable lithium battery module according to any of the preceding claims, wherein:
the metal coating layer (512) comprises Al, Cu, Fe, Ni, stainless steel (SUS), Ti, or a combination thereof.

8. The rechargeable lithium battery module according to any of the preceding claims, wherein:
a thickness of the polymer film (510) is 2 µm to 10 µm.

9. The rechargeable lithium battery module according to any of the preceding claims, wherein:
a thickness of the metal coating layer (512) is 0.5 µm to 5 µm.

10. The rechargeable lithium battery module according to any of the preceding claims, wherein
a ratio of a thickness of the polymer film (510) to a thickness of the metal coating layer (512) is 1:1 to 10:1.

11. The rechargeable lithium battery module according to any of the preceding claims, wherein:
the cell structure (500, 100) comprises a positive electrode (10) comprising a positive electrode active material, a negative electrode (20) comprising a negative electrode active material, a separator (30) between the positive electrode (10) and the negative electrode (20), and an electrolyte solution.

12. The rechargeable lithium battery module according to any of claims 1 to 10, wherein:
the cell structure (500, 100) comprises a positive electrode (10) comprising a positive electrode active material, a negative electrode (20) comprising a negative electrode active material, a solid electrolyte layer between the positive electrode (10) and the negative electrode (20).
